# FASCICULE DE BREVET EUROPEEN

(11) **EP 1 570 662 B1**
(45) Date de publication et mention de la délivrance du brevet: **04.04.2007**
(21) Numéro de dépôt: 03799717.8
(22) Date de dépôt: 11.12.2003
(51) Int. Cl.: H04N 7/16

(54) **PROCEDE DE DISTRIBUTION DE DONNEES ET/OU SERVICES EMBROUILLES.**
VERFAHREN ZUM VERTEILEN VERW RFELTER DIENSTE UND/ODER DATEN
METHOD OF DISTRIBUTING SCRAMBLED SERVICES AND/OR DATA

(30) Priorité: 12.12.2002 FR 0215736
(43) Date de publication de la demande: 07.09.2005
(73) Titulaire: Viaccess, 92057 Paris La Defense (FR)
(72) Inventeur: LE BARS, Bernard, F-91200 Athis-Mons (FR); AALST, Theo Van, NL-5583 CB Waalre (NL)
(74) Mandataire: Poulin, Gérard
(86) Numéro de dépôt international: PCT/FR2003/050161
(87) Numéro de publication internationale: WO 2004/056109

(56) Documents cités:
- FR-A- 2 779 599
- US-A- 5 748 732

## Description

### DOMAINE TECHNIQUE

L'invention se situe dans le domaine de la distribution sécurisée de données et/ou services dans un réseau.

Plus spécifiquement, l'invention concerne un procédé de distribution de données et/ou services embrouillés à au moins un terminal maître et à au moins un terminal esclave associé audit terminal maître.

L'invention concerne également un système de distribution de données et/ou services embrouillés comportant un module central de gestion des abonnés, un générateur de messages de gestion de titres d'accès (EMM), une plate-forme d'embrouillage.

Les données et/ou services sont distribués à au moins un terminal maître et à au moins un terminal esclave munis chacun d'un processeur de sécurité. Les terminaux maîtres et esclaves pouvant être des ordinateurs ou des récepteurs audiovisuels munis d'un décodeur. Les processeurs de sécurité sont des logiciels enregistrés dans la mémoire de l'ordinateur ou dans la mémoire d'une carte à puce.

### ETAT DE LA TECHNIQUE ANTERIEURE

Lorsqu'un abonné dispose de plusieurs terminaux de réception de données et/ou services embrouillés, hormis une connexion physique entre les différents terminaux ou l'utilisation de la voie de retour (identification du N° de Tel appelant ou adresse MAC (pour Medium Access Control) ou @IP (pour Internet Protocol) de chaque terminal, l'opérateur ne dispose pas de solution simple lui permettant de contrôler l'attribution de droits d'accès interdépendants aux différents terminaux de l'abonné.

Le but de l'invention est de fournir aux opérateurs un procédé et système simples pour affecter de façon contrôlée des droits d'accès interdépendants aux différents terminaux de l'abonné.

Le document FR2779599 décrit une solution de dépendance d'un terminal esclave vis à vis d'un terminal maître construite sur la relation entre identifiant du terminal maître et identifiant du terminal esclave. Ces 2 identifiants étant corrélés, il est possible de disposer des moyens de dialogue avec l'opérateur, par l'intermédiaire d'une voie de retour, sur le seul terminal maître.

Cette solution est sans application dans le cas d'un système de diffusion pure, sans voie de retour, cas d'architecture fréquemment rencontré. En outre, le terminal esclave reste indépendant du terminal maître pour la gestion des droits d'accès qui ne nécessitent pas de requêtes explicites vers l'opérateur, par exemple dans le cas de renouvellement automatique d'un abonnement mensuel. Enfin la solution ne crée pas de dépendance de proximité entre

terminaux puisqu'elle peut être utilisée même si les 2 terminaux sont distants l'un de l'autre (par exemple, dans 2 maisons distinctes, voire plus loin).

Le document US5,748,732 décrit une solution de dépendance d'un terminal esclave vis à vis d'un terminal maître. Dans cette solution, les droits émis par l'opérateur pour un terminal esclave sont envoyés dans des messages adressés au seul terminal maître et mémorisés dans celui-ci (C3 L64 et suiv.). Pour renouveler les droits d'un terminal esclave, il convient d'insérer la carte de ce terminal esclave dans le terminal maître pour que les messages concernant ce terminal esclave puissent être traités par sa carte et inscrire les droits correspondants. La dépendance maître / esclave est ainsi réalisée par le fait qu'il faut pouvoir insérer la carte du terminal esclave dans le terminal maître pour mettre à jour les droits.

Cette solution présente l'inconvénient de lier la fréquence de vérification de la dépendance maître / esclave à la fréquence de renouvellement des droits. Une fréquence d'une semaine peut être acceptable pour le renouvellement des droits d'un terminal esclave, mais peut être trop large pour contrôler efficacement que le terminal esclave ne peut être utilisé dans le foyer et non pas chez le voisin ou ailleurs. En outre, elle oblige à ajouter une fonctionnalité de sous-adressage aux messages d'accès conditionnel (un message est adressé à un terminal esclave par l'intermédiaire de l'adressage d'un terminal maître) et d'étendre la syntaxe de ces messages de façon significative.

### EXPOSÉ DE L'INVENTION

L'invention préconise un procédé de distribution de données et/ou services embrouillés à un abonné muni d'un terminal maître auquel sont associés des droits d'accès principaux et de terminaux additionnels esclaves, auxquels sont associés des droits d'accès subsidiaires dépendant des droits d'accès principaux.

Le procédé selon l'invention est défini dans le revendication 1.

Ainsi, un abonné peut recevoir les données et/ou services sur un terminal principal pour lequel il a préalablement acquis des droits d'accès et tout ou partie de ces données et/ou services sur plusieurs autres terminaux secondaires pour lesquels il a acquis un droit d'accès associé au droit principal, identique à celui-ci ou restreint par rapport à celui-ci et défini en fonction de choix commerciaux ou de critères spécifiques à chaque terminal (récepteur comportant une limitation parentale, linguistique, etc.).

Par exemple, l'opérateur peut attribuer une réduction de coût à un abonné pour un deuxième abonnement sous réserve que cet abonnement soit effectivement utilisé par ce seul abonné sur son deuxième terminal. De cette façon, l'opérateur peut se prémunir du détournement de cette stratégie commerciale si l'usage du deuxième abonnement était techniquement limité au deuxième terminal de l'abonné.

Avantageusement, le procédé selon l'invention comporte en outre une étape consistant à générer à fréquence variable un nouveau code secret S_{M} et un nouveau code S_{S} en relation biunivoque avec le nouveau code S_{M}.

Dans un mode particulier de réalisation, chaque terminal est associé à une carte à puce.

Dans une variante de réalisation, cette carte à puce peut être appariée au terminal.

Le procédé selon l'invention est mis en oeuvre par un système de distribution de données et/ou services embrouillés comportant un module central de gestion des abonnés, un générateur de messages de gestion de titres d'accès (EMM) et une plate-forme d'embrouillage comme défini dans la revendication 8.

Dans une première variante de réalisation, le système selon l'invention comporte un seul terminal maître et un seul terminal esclave.

Dans une deuxième variante, le système selon l'invention comporte une pluralité de terminaux maîtres, et une pluralité de terminaux esclaves.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un schéma d'un système mettant en oeuvre le procédé selon l'invention,
- la figure 2 représente schématiquement le fonctionnement du système de la figure 1.

### EXPOSÉ DÉTAILLÉ DE MODES DE RÉALISATION PARTICULIERS

Afin d'illustrer le procédé selon l'invention, la description qui suit se situe dans un contexte de diffusion de programmes audiovisuels embrouillés à des abonnés connectés à un réseau de télévision numérique.

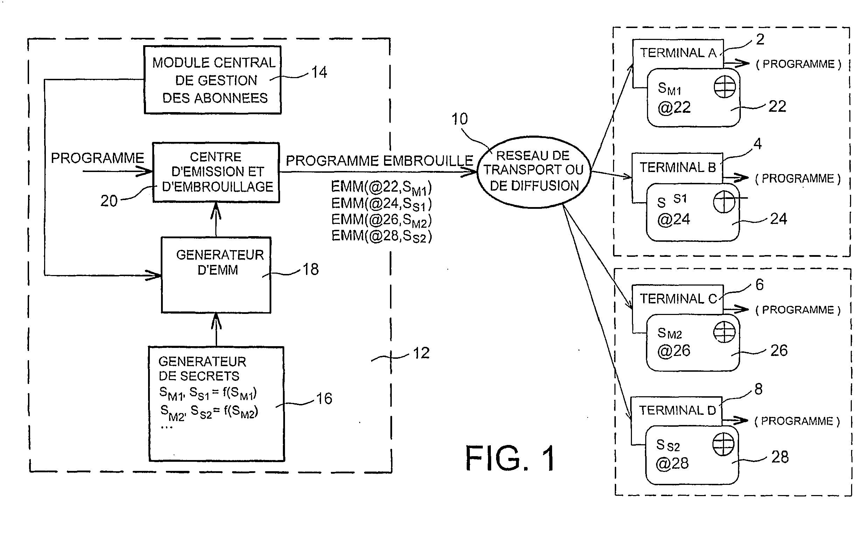

La figure 1 illustre schématiquement un premier groupe de terminaux 2, 4 d'un premier abonné et un deuxième groupe de terminaux 6, 8 d'un deuxième abonné connectés, via un réseau de transport 10, à un système de diffusion 12.

Ce système de diffusion comporte un module central 14 de gestion des abonnés, un générateur de codes secrets 16 et un générateur de messages de gestion de titres d'accès EMM 18 destinés à véhiculer les codes secrets générés, et une plate-forme d'embrouillage 20.

Les terminaux 2, 4, 6 et 8 sont associés, voire appariés, à une carte à puce 22, 24, 26 et 28 respectivement.

Le générateur de codes secrets 16 comporte un module de calcul apte à définir un premier code secret S_{M1} et un deuxième code secret S_{M2}, et à calculer un troisième code secret Sₛ₁ en fonction du premier code secret S_{M1} et un quatrième code secret Sₛ₂ en fonction du deuxième code secret S_{M2}.

Le module central 14 de gestion des abonnés comporte une base de données contenant des informations sur chaque abonné. Ces informations concernent par exemple le nombre de terminaux déclarés par l'abonné et les critères associés à chaque terminal, tel que par exemple les droits d'accès déjà acquis ou des limitations relatives au type de programmes que peut recevoir un terminal ou encore aux plages horaires de réception.

Le générateur d'EMM 18 comporte un module logiciel apte à générer des messages EMM(@22, S_{M1}), EMM(@24, S_{S1}), EMM(@26, S_{M2}) et EMM(@28, S_{S2}) destinés à véhiculer les codes secrets S_{M1}, S_{M2}, S_{S1} et S_{S2} et les critères de réception définis par le module 14 respectivement au terminal 2, terminal 4, terminal 6 et terminal 8 à travers le réseau de transport 10.

Les messages EMM(@22, S_{M1}), EMM(@24, S_{S1}), EMM(@26, S_{M2}) et EMM(@28, S_{S2}) sont transmis de façon répétée aux terminaux de l'abonné.

A réception de ces messages EMM, les codes secrets S_{M1}, S_{M2}, S_{S1} et S_{S2} et les critères de réception définis par le module 14 sont inscrits dans les cartes à puce 22, 24, 26 et 28 respectivement. Ces cartes à puce et ou les terminaux comportent un logiciel apte à distinguer les codes secrets maîtres des codes secrets esclaves.

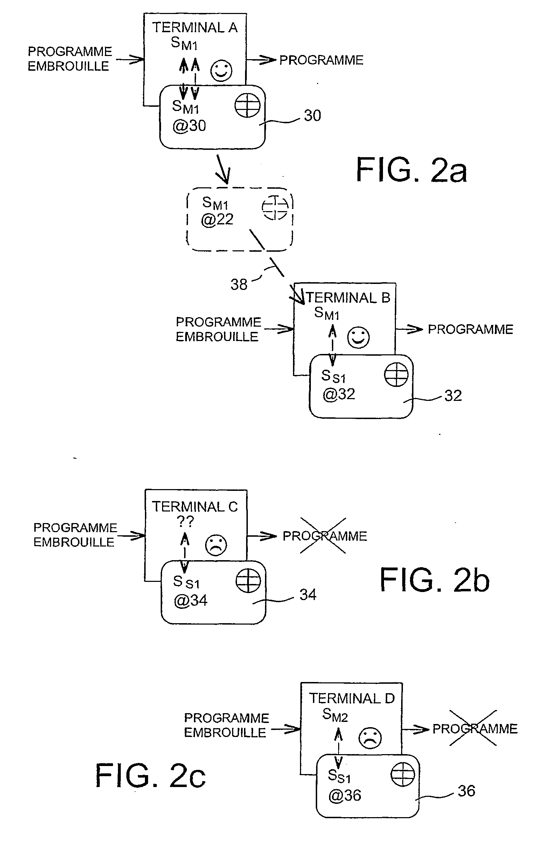

Les figures 2a à 2c illustrent schématiquement trois situations distinctes dans lesquelles des programmes audiovisuels embrouillés sont transmis à un abonné muni d'un terminal maître A associé à une carte à puce 30 et de trois terminaux esclaves B, C et D associés respectivement à des cartes à puce 32, 34 et 36.

Dans le cas illustré par la figure 2a, les programmes embrouillés sont reçus par le terminal maître A où ils sont désembrouillés de façon classique au moyen d'un mot de contrôle transmis sous forme chiffré dans un message de contrôle de titre d'accès ECM (pour Entitlement Control Message). Le message ECM est exploité dans le terminal A après avoir été déchiffré par une clé utilisateur préalablement inscrite dans la carte à puce 30. L'ECM conditionnant l'accès aux programmes est exploitable par le terminal maître A du fait que la carte à puce qui lui est associée dispose d'un code secret maître identique à celui qui est stocké dans le terminal maître A. Ainsi, le contrôle des codes secrets de la carte et du terminal peut être effectué indifféremment par la carte ou par le terminal.

Lorsque le contrôle est fait dans la carte, si les codes secrets S_{M} et S_{S} sont en relation biunivoque, celle-ci envoie un ECM déchiffré exploitable au terminal, sinon, elle n'envoie pas un tel ECM au terminal.

Par contre, si le contrôle est effectué dans le terminal, la carte à puce envoie un ECM déchiffré et le terminal accepte ou n'accepte pas d'exploiter cet ECM selon que les codes secrets S_{M} et S_{S} sont en relation biunivoque ou ne le sont pas.

Dans le cas illustré par la figure 2a, la carte à puce 32 du terminal esclave B comporte un code secret S_{S1} en relation biunivoque avec le code secret S_{M1} préalablement enregistré (flèche 38) dans le terminal esclave B au moyen de la carte à puce 30.

Les programmes embrouillés sont reçus par le terminal esclave B où ils sont désembrouillés de façon classique au moyen d'un mot de contrôle transmis sous forme chiffré dans un message de contrôle de titre d'accès ECM (pour Entitlement Control Message). Le message ECM est exploité dans le terminal B après avoir été déchiffré par une clé utilisateur préalablement inscrite dans la carte à puce 32. L'ECM conditionnant l'accès aux programmes est exploitable par le terminal esclave B du fait que la carte à puce qui lui est associée dispose d'un code secret esclave correspondant de manière biunivoque au code secret maître stocké dans le terminal esclave B.

Ainsi, dans ce cas également, le contrôle des codes secrets de la carte et du terminal peut être effectué indifféremment par la carte ou par le terminal.

Dans le cas illustré par la figure 2b, le code secret S_{M1} n'a pas encore été transféré dans le terminal esclave C. Les programmes embrouillés reçus par ce terminal esclave C ne pourront pas être désembrouillés car la carte à puce 34 du terminal esclave C comporte un code secret S_{S1} en relation biunivoque avec le code secret S_{M1}.

Dans le cas illustré par la figure 2c, le code secret maître S_{M2} transféré dans le terminal esclave D n'est pas compatible avec le code secret S_{S1} inscrit dans la carte à puce 36. Les programmes embrouillés reçus par le terminal maître A ne pourront pas non plus être reçus par le terminal esclave D.

Dans les différents cas, chaque fois qu'un utilisateur veut utiliser un terminal esclave dont le code secret maître n'existe pas ou n'est pas compatible avec le code secret de la carte à puce, une annonce s'affiche sur un écran pour l'inviter à insérer la carte à puce associée au terminal maître pour transférer le code secret maître dans le terminal esclave. Le logiciel résident dans la carte à puce ou dans le terminal vérifie la compatibilité des codes secrets maître et esclave et autorise l'utilisation du terminal esclave si ces codes sont compatibles.

Il en résulte qu'aucun terminal esclave ne pourra être utilisé sans l'autorisation du terminal maître. Ceci permet d'empêcher la réception frauduleuse de programmes embrouillés par un terminal non muni de droits d'accès.

## Revendications

1. Procédé de distribution de données et/ou services embrouillés à au moins un terminal maître et à au moins un terminal esclave associé audit terminal maître, procédé **caractérisé en ce qu'**il comporte les étapes suivantes :
- transmettre au terminal maître un premier code secret S_{M} et au terminal esclave un deuxième code secret Sₛ en relation biunivoque avec le premier code S_{M},
- enregistrer le premier code secret S_{M} dans le terminal maître et le deuxième code secret S_{S} dans chaque terminal esclave,
et à chaque utilisation d'un terminal esclave,
- vérifier si ce deuxième code S_{S} est en relation biunivoque avec le code secret S_{M} enregistré dans le terminal esclave,
- autoriser la réception des données et/ou services par le terminal esclave uniquement si la vérification est positive.
- requérir le transfert depuis le terminal maître du premier code secret S_{M} dans ledit terminal esclave si la vérification est négative.

2. Procédé selon la revendication 1 **caractérisé en ce qu'**il comporte l'étape suivante :
- définir un premier type de messages de gestion de titres d'accès (EMMm) pour transmettre le premier code secret S_{M} au terminal maître, et un deuxième type de messages de gestion de titres d'accès (EMMs) pour transmettre le deuxième code secret S_{S} à chaque terminal esclave,

3. Procédé selon la revendication 1, **caractérisé en ce qu'**il comporte en outre une étape consistant à générer à fréquence variable un nouveau code secret S_{M} et un nouveau code S_{S} en relation biunivoque avec le nouveau code S_{M}.

4. Procédé selon la revendication 3 **caractérisé en ce qu'**il comporte les étapes suivantes :
- définir un premier type de messages de gestion de titres d'accès (EMMm) pour transmettre le nouveau code secret S_{M} au terminal maître, et un deuxième type de messages de gestion de titres d'accès (EMMs) pour transmettre le nouveau code secret S_{S} à chaque terminal esclave,
- enregistrer ce nouveau code secret S_{M} dans le terminal maître et le nouveau code secret S_{S} dans chaque terminal esclave et,
à chaque utilisation d'un terminal esclave,
- si ce nouveau code secret S_{S} n'est pas en relation biunivoque avec le code secret S_{M} préalablement enregistré dans le terminal esclave,
- requérir l'enregistrement du nouveau code secret S_{M} dans ledit terminal esclave.

5. Procédé selon l'une des revendications 1 à 4, **caractérisé en ce que** chaque terminal comporte un processeur de sécurité.

6. Procédé selon la revendication 5, **caractérisé en ce que** le processeur de sécurité est une carte à puce associée au terminal.

7. Procédé selon la revendication 6, **caractérisé en ce que** ladite carte à puce est appariée audit terminal.

8. Système de distribution de données et/ou services embrouillés à au moins un terminal maître et à au moins un terminal esclave, munis chacun d'un processeur de sécurité, ledit système comportant :
- un module central de gestion des abonnés (14),
- un générateur de messages de gestion de titres d'accès (EMM) (16),
- une plate-forme d'embrouillage (18),
système **caractérisé en ce qu'**il comporte en outre :
- des moyens pour transmettre à chaque terminal maître un premier code secret S_{M}, et à chaque terminal esclave un deuxième code secret Sₛ en relation biunivoque avec le premier code secret S_{M},
- des moyens pour enregistrer le premier code S_{M} dans le terminal maître et le deuxième code secret S_{S} dans chaque terminal esclave,
- des moyens de contrôle destinés à vérifier si le deuxième code secret S_{S} est en relation biunivoque avec le code secret S_{M} mémorisé dans ledit terminal esclave.
- des moyens pour autoriser la réception des données et/ou services par le terminal esclave uniquement si la vérification est positive, et
- requerir le transfert depuis le terminal maître du premier, code secret S_{M} dans ledit terminal esclave si la vérification est négative.

9. Système selon la revendication 8, **caractérisé qu'**il comporte un seul terminal maître et un seul terminal esclave.

10. Système selon la revendication 8, **caractérisé en ce qu'**il comporte une pluralité de terminaux maîtres, et une pluralité de terminaux esclaves.

## Claims

1. Method for the distribution of scrambled data and/or services to at least one master terminal and to at least one slave terminal linked with said master terminal, **characterized in that** it comprises the following steps:
- transmitting to the master terminal a first secret code S_{M} and to each slave terminal a second secret code S_{S} in a biunique relationship with the first code S_{M},
- recording the first secret code S_{M} in the master terminal and the second secret code S_{S} in each slave terminal and on each use of a slave terminal,
- checking if said second code S_{S} is in a biunique relationship with the secret code S_{M} recorded in the slave terminal,
- authorizing the reception of the data and/or services by a slave terminal only if the check is positive,
- requesting the transfer from the master terminal of the first secret code S_{M} into said slave terminal if the check is negative.

2. Method according to claim 1, **characterized in that** it comprises the following step:
- defining a first type of entitlement management messages (EMMm) to transmit the first secret code S_{M} to the master terminal, and a second type of entitlement management messages (EMMs) to transmit the second secret code S_{S} to each slave terminal.

3. Method according to claim 1, **characterized in that** it also comprises a step consisting of generating at a variable frequency a new secret code S_{M} and a new code S_{S} in a biunique relationship with the new code S_{M}.

4. Method according to claim 3, **characterized in that** it comprises the following steps:
- defining a first type of entitlement management messages (EMMm) to transmit the new secret code S_{M} to the master terminal, and a second type of entitlement management messages (EMMs) to transmit the new secret code S_{S} to each slave terminal,
- storing this new secret code S_{M} in the master terminal and the new secret code S_{S} in each slave terminal and,
for each use of a slave terminal,
- if this new secret code S_{S} is not in a biunique relationship with the secret code S_{M} previously stored in the slave terminal,
- requesting that the new secret code S_{M} be entered up in said slave terminal.

5. Method according to any of claims 1 to 4, **characterized in that** each terminal comprises a security processor.

6. Method according to claim 5, **characterized in that** the security processor is a smart card linked with the terminal.

7. Method according to claim 6, **characterized in that** said smart card is paired with said terminal.

8. Scrambled data and/or service distribution system to at least one master terminal and at least one slave terminal, each equipped with a security processor, said system comprising:
- a central subscriber management module (14),
- an entitlement management message (EMM) generator (16),
- a scrambling platform (18),
**characterized in that** it also comprises:
- means to transmit to the master terminal a first secret code S_{M}, and to each slave terminal a second secret code S_{S} in a biunique relationship with the first secret code S_{M},
- means for recording the first code S_{M} in the master terminal and the second secret code S_{S} in each slave terminal,
- checking means for checking if the second secret code S_{S} is in biunique relationship with the secret code S_{M} stored in said slave terminal,
- means for authorizing the reception of data and/or services by the slave terminal alone if the check is positive and
- requesting the transfer from the master terminal of the first secret code S_{M} into said slave terminal if the check is negative.

9. System according to claim 8, **characterized in that** it comprises a single master terminal and a single slave terminal.

10. System according to claim 8, **characterized in that** it comprises a plurality of master terminals, and a plurality of slave terminals.

## Patentansprüche

1. Verfahren zur Verteilung von verwürfelten Daten und/oder Diensten an wenigstens einen Master-Terminal und an wenigstens einen dem Master-Terminal zugeordneten Slave-Terminal, wobei das Verfahren **dadurch gekennzeichnet ist, dass** es die folgenden Schritte umfasst:
- Übertragen eines ersten Geheimcodes S_{M} an den Master-Terminal und eines zweiten Geheimcodes S_{S} an den Slave-Terminal in eineindeutiger Relation mit dem ersten Code S_{M},
- Speichern des ersten Geheimcodes S_{M} in dem Master-Terminal und des zweiten Geheimcodes S_{S} in jedem Slave-Terminal, und - bei jeder Benutzung eines Slave-Terminals -
- Überprüfen, ob dieser zweite Code S_{S} in eineindeutiger Relation mit
dem Geheimcode S_{M} ist, der in dem Slave-Terminal gespeichert ist,
- Autorisieren des Empfangs der Daten und/oder Dienste durch den Slave-Terminal nur dann, wenn die Überprüfung positiv verläuft,
- Anfordern der Übertragung des ersten Geheimcodes S_{M} vom Master-Terminal zu dem Slave-Terminal, wenn die Überprüfung negativ verläuft.

2. Verfahren nach Anspruch 1, **dadurch gekennzeichnet, dass** es den folgenden Schritt umfasst:
- Definieren eines ersten Typs von Zugriffsrecht-Verwaltungsnachrichten (EMMm) für die Übertragung des ersten Geheimcodes S_{M} zum Master-Terminal, sowie eines zweiten Typs von Zugriffsrecht-Verwaltungsnachrichten (EMMs) zur Übertragung des zweiten Geheimcodes S_{S} an jeden Slave-Terminal.

3. Verfahren nach Anspruch 1, **dadurch gekennzeichnet, dass** es ferner einen Schritt umfasst, der darin besteht, mit variabler Frequenz einen neuen Geheimcode S_{M} und einen neuen Code S_{S} in eineindeutiger Relation mit dem neuen Code S_{M} zu generieren.

4. Verfahren nach Anspruch 3, **dadurch gekennzeichnet, dass** es die folgenden Schritte umfasst:
- Definieren eines ersten Typs von Zugriffsrecht-Verwaltungsnachrichten (EMMm) zum Übertragen des neuen Geheimcodes S_{M} zum Master-Terminal, sowie eines zweiten Typs von Zugriffsrecht-Verwaltungsnachrichten (EMMs) zum Übertragen des neuen Geheimcodes S_{S} an jeden Slave-Terminal,
- Speichern dieses neuen Geheimcodes S_{M} in dem Master-Terminal und des neuen Geheimcodes S_{S} in jedem Slave-Terminal, und
bei jeder Benutzung eines Slave-Terminals,
- wenn dieser neue Geheimcode S_{S} nicht in eineindeutiger Relation mit dem vorher im Slave-Terminal gespeicherten Geheimcode S_{M} ist,
- Anfordern der Speicherung des neuen Geheimcodes S_{M} in dem Slave-Terminal.

5. Verfahren nach einem der Ansprüche 1 bis 4, **dadurch gekennzeichnet, dass** jeder Terminal einen Sicherheitsprozessor enthält.

6. Verfahren nach Anspruch 5, **dadurch gekennzeichnet, dass** der Sicherheitsprozessor eine dem Terminal zugeordnete Chipkarte ist.

7. Verfahren nach Anspruch 6, **dadurch gekennzeichnet, dass** die Chipkarte dem Terminal paarweise zugewiesen ist.

8. System zur Verteilung von verwürfelten Daten und/oder Diensten an wenigstens einen Master-Terminal und an wenigstens einen Slave-Terminal, die jeweils mit einem Sicherheitsprozessor ausgestattet sind, wobei das System umfasst:
- Ein zentrales Modul zur Verwaltung von Teilnehmern (14),
- einen Generator für Zugriffsrecht-Verwaltungsnachrichten (EMM) (16),
- eine Verwürfelungsplattform (18),
wobei das System **dadurch gekennzeichnet ist, dass** es ferner umfasst:
- Mittel zum Übertragen eines ersten Geheimcodes S_{M} an jeden Master-Terminal sowie eines zweiten Geheimcodes S_{S} an jeden Slave-Terminal in eineindeutiger Relation mit dem ersten Geheimcode S_{M},
- Mittel zum Speichern des ersten Geheimcodes S_{M} in dem Master-Terminal und des zweiten Geheimcodes S_{S} in jedem Slave-Terminal,
- Kontrollmittel, die zur Überprüfung ausgelegt sind, ob der zweite Geheimcode Sₛ in eineindeutiger Relation mit dem in dem Slave-Terminal gespeicherten Geheimcode S_{M} ist,
- Mittel zum Autorisieren des Empfangs von Daten und/oder Diensten durch den Slave-Terminal nur dann, wenn die Überprüfung positiv verläuft, und
- zum Anfordern der Übertragung des ersten Geheimcodes S_{M} von dem Master-Terminal zu dem Slave-Terminal, wenn die Überprüfung negativ verläuft.

9. System nach Anspruch 8, **dadurch gekennzeichnet, dass** es einen einzigen Master-Terminal und einen einzigen Slave-Terminal umfasst.

10. System nach Anspruch 8, **dadurch gekennzeichnet, dass** es eine Mehrzahl von Master-Terminals und eine Mehrzahl von Slave-Terminals umfasst.
